# EUROPEAN PATENT APPLICATION

(11) **EP 4 538 863 A1**
(43) Date of publication of application: **16.04.2025**
(21) Application number: 23852728.7
(22) Date of filing: 26.06.2023
(51) Int. Cl.: G06F 8/41, G06F 9/54, G06F 9/4401, G06F 9/48

(54) **ELECTRONIC DEVICE FOR COMPILING FILES ON BASIS OF DESIGNATED EVENTS, AND METHOD THEREFOR**

(30) Priority: 12.08.2022 KR 20220101532; 13.09.2022 KR 20220115226
(71) Applicant: Samsung Electronics Co., Ltd., Suwon-si, Gyeonggi-do 16677 (KR)
(72) Inventor: JEONG, Kwanhee, Suwon-si, Gyeonggi-do 16677 (KR); LIM, Chanbin, Suwon-si, Gyeonggi-do 16677 (KR); KIM, Hyoungjong, Suwon-si, Gyeonggi-do 16677 (KR); LEE, Haewook, Suwon-si, Gyeonggi-do 16677 (KR)
(74) Representative: Appleyard Lees IP LLP
(86) International application number: PCT/KR2023/008878
(87) International publication number: WO 2024/034841

(57) **Abstract**

An electronic device according to an embodiment may detect a designated event that causes termination of an application executed by a processor. The electronic device may, in response to detecting the designated event, identify the number of times the designated event has occurred on the basis of an execution of the application. The electronic device may, on the basis of the identified number of times the designated event has occurred, compile a non-binary file including instructions of a second type that corresponds to instructions of a first type related to the designated event and is different from the first type, so as to obtain a binary file related to the execution of the application.

## Description

### [Technical Field]

The following descriptions relate to an electronic device for compiling files on basis of designated events, and a method therefor.

### [Background Art]

An electronic device may include a processor that processes an instruction (e.g., an instruction indicated by a machine language and/or a native code) indicated by a digital signal. In order to control the processor, compiling a source code inputted from a user into a native code may be required. A compilation may be a conversion of the source code or a byte code into the native code.

### [Disclosure]

### [Technical Solution]

According to an embodiment, an electronic device may include a processor, and memory for storing instructions. The processor to drive the instructions in a first type, when the instructions stored in the memory are executed, may detect a preset event to cause termination of an application executed by the processor. The processor may identify, in response to detecting the preset event, the number that the preset event occurred based on execution of the application. The processor, based on the identified number, may obtain a binary file associated with execution of the application by compiling a non-binary file that corresponds to instructions in the first type associated with the preset event and includes instructions in a second type different from the first type.

According to an embodiment, an electronic device may include a processor, and memory for storing instructions. The processor to drive the instructions in a first type, when the instructions stored in the memory are executed, based on a binary file generated by compiling a non-binary file in which instructions in a second type, stored in the memory, are stored, may execute a first application associated with the non-binary file. The processor may detect a preset event to cause termination of the executed first application, based on a second application different from the first application while the first application is being executed. The processor may identify whether the first application has been terminated based on at least one of the instructions stored in the binary file based on detecting the preset event based on the second application. The processor may perform a compilation on the non-binary file in response to identifying that the first application has been terminated based on at least one of the instructions stored in the binary file.

A method of an electronic device according to an embodiment may detect, using a processor to drive instructions in a first type, a preset event to cause termination of an application executed by the processor. The method of the electronic device may include identifying, in response to detecting the preset event, the number that the preset event occurred based on execution of the application. The method of the electronic device, based on the identified number, may include obtaining a binary file associated with execution of the application by compiling a non-binary file that corresponds to instructions in the first type associated with the preset event and includes instructions in a second type different from the first type.

A method of an electronic device according to an embodiment, based on a binary file generated by compiling a non-binary file in which instructions in a second type for obtaining instructions in a first type are stored, may include executing a first application associated with the binary file. The method of the electronic device may include detecting a preset event to cause termination of the executed first application, based on a second application different from the first application while the first application is being executed. The method of the electronic device may include identifying whether the first application has been terminated based on at least one of the instructions stored in the binary file based on detecting the preset event based on the second application. The method of the electronic device may include performing a compilation on the non-binary file in response to identifying that the first application has been terminated based on at least one of the instructions stored in the binary file.

### [Description of the Drawings]

FIG. 1 is a block diagram of an electronic device in a network environment according to an embodiment.
FIG. 2 is an example of a processor that executes a file stored in storage of an electronic device according to an embodiment.
FIG. 3 is an example of a processor that executes a file stored in storage of an electronic device according to an embodiment.
FIG. 4 is an example of a processor that executes a file stored in storage of an electronic device according to an embodiment.
FIG. 5 is an example of a processor that executes a file stored in storage of an electronic device according to an embodiment.
FIG. 6 is an example illustrating a file compiled by a compiler according to an embodiment.
FIG. 7 is an example of a flowchart of an operation of an electronic device according to an embodiment.
FIG. 8 is an example of a flowchart of an operation of an electronic device according to an embodiment.
FIG. 9 is an example of a flowchart of an operation of an electronic device according to an embodiment.
FIG. 10 is an example of a flowchart of an operation of an electronic device according to an embodiment.

### [Mode for Invention]

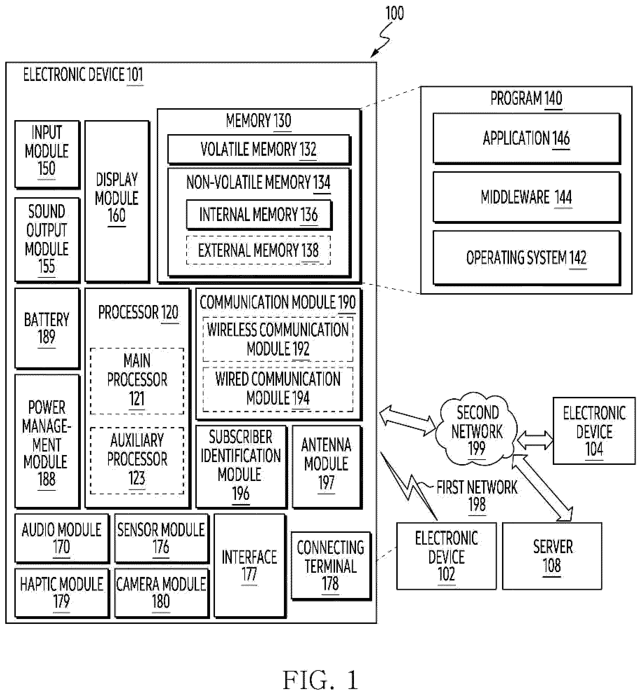

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

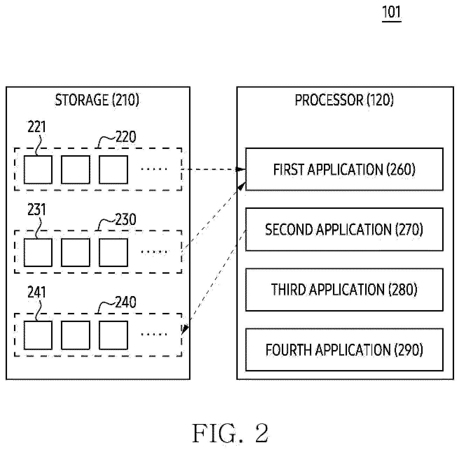

FIG. 2 is an example of a processor that executes a file stored in storage of an electronic device according to an embodiment. An electronic device 101 of FIG. 2 may be an example of the electronic device 101 of FIG. 1. A processor 120 of FIG. 2 may be an example of the processor 120 of FIG. 1.

Referring to FIG. 2, the electronic device 101 according to an embodiment may include at least one of storage 210, or the processor 120. The processor 120, and the storage 210 may be electronically and/or operably coupled with each other by an electronic component such as a communication bus. Although illustrated based on different blocks, an embodiment is not limited thereto. For example, a portion (e.g., at least a portion of the processor 120, and/or the storage 210) of hardware component illustrated in FIG. 2 may be included in a single integrated circuit such as a system on a chip (SoC). A type and/or the number of the hardware component included in the electronic device 101 are not limited to those illustrated in FIG. 2. For example, the electronic device 101 may include only a portion of the hardware component illustrated in FIG. 2. The processor 120, and/or the storage 210 are illustrated in a single number, but may be plural.

The processor 120 of the electronic device 101 according to an embodiment may correspond to at least a portion of the processor 120 of FIG. 1. The processor 120 according to an embodiment may include the hardware component for processing data based on one or more instructions. For example, the hardware component for processing the data may include an arithmetic and logic unit (ALU), a floating point unit (FPU), a field programmable gate array (FPGA), an application processor (AP), a micro-computer (Micom) (and/or micro-controller), and/or a central processing unit (CPU). The number of the processors 120 may be one or more. For example, the processor 120 may have a structure of a multi-core processor such as a dual core, a quad core, or a hexa core. For example, the processor 120 may have a structure of a single core processor such as a single core. However, it is not limited thereto.

The electronic device 101 according to an embodiment may include the storage 210. The storage 210 may correspond to the non-volatile memory 134 of FIG. 1. For example, the storage 210 may store instructions that cause an operation of the electronic device 101. For example, the processor 120 may cause the operation of the electronic device 101 when driving the instructions stored in the storage 210.

Hereinafter, driving the instruction may include the processor 120 invoking (or loading) at least one instruction to execute the invoked (or loaded) instruction. For example, driving the instruction may include the processor 120 executing a function corresponding to the instruction by driving the instruction.

The storage 210 of the electronic device 101 according to an embodiment may include the hardware component for storing data and/or the instruction inputted to and/or outputted from the processor 210. For example, the storage 210 may include non-volatile memory such as read-only memory (ROM). For example, the non-volatile memory may include at least one of programmable ROM (PROM), erasable PROM (EPROM), electrically erasable PROM (EEPROM), flash memory, hard disk, compact disk, and embedded multi media card (eMMC).

In the storage 210, one or more instructions indicating a calculation and/or an operation to be performed by the processor 210 on data may be stored. A set of one or more instructions may be referred to as firmware, an operating system, a process, a routine, a sub-routine, and/or an application.

The electronic device 101 according to an embodiment may identify a partition formed in the storage 210. The partition is a unit for managing data (e.g., a file, and/or a directory) stored in the storage 210, and may be referred to as volume and/or a logical drive. The partition may include at least a portion of a single non-volatile memory, or may be formed by merging different portions of different non-volatile memories. The number of the partition formed in the storage 210 may be one or more.

The electronic device 101 according to an embodiment may identify an area in the partition. For example, one area of a plurality of areas formed in a first partition based on an interaction between the electronic device 101 and a user may correspond to a first directory 220 of FIG. 2. The directory may be a structure for classifying files stored in the partition. The structure may include an uppermost directory. Other directories included in the structure may be directly or indirectly connected to the uppermost directory. For example, the first directory 220 may include files that may be executed by the user of the electronic device 101. For example, a file 221 may be executed by the user of electronic device 101 and executed by the processor 120. For example, a second directory 230 may be included in a system partition. For example, the second directory 230 may include a bootclass. For example, the second directory 230 may include a system server class. A second file 231 included in the second directory 230 may include instructions loaded by the processor 120, based on identification of accessing a system service of the operating system (e.g., the operating system 142 of FIG. 1) by the at least one application when at least one of the applications included in the first directory 220 is executed, and/or accessing a resource (e.g., an application programming interface (API)) provided by the operating system. The processor 120 of the electronic device 101 according to an embodiment may perform validation, update, and/or mounting of the second file 231 in the second directory 230 based on an android pony express (APEX) container format while performing boot-up of the electronic device 101. The validation may be performed by a process, such as the update, and/or the mount may be performed by a process, such as an APEX module. The update based on the APEX container format may include updating a system component (e.g., a native service, a library, a hardware abstraction layer (HAL), and/or a class library) based on the second file 231. The update of the APEX container format and/or the second file 231 based on the APEX module may be limitedly performed based on the update of the APEX container format provided by the operating system of the electronic device 101, and damage to, and/or update of a package file associated with the application.

For example, the APEX module and/or APEX container format may include at least one of one or more resources (e.g., icon, image, and/or video), a design element (e.g., an xml file to define a layout of activity), and/or metadata (e.g., an xml file with a preset name such as manifest) required for the execution of the application.

For example, a third file 241 included in a third directory 240 may include information associated with a preset event that occurred while executing an application associated with the first file 221. For example, the third file 241 included in the third directory 240 may include information associated with the preset event that occurred while executing the second file 231. The information may include a history in which the preset event occurred. The preset event may include causing termination of the application while executing the application associated with the first file 221. For example, the preset event may include a crash causing the termination of the application. The crash of the application is an event in which execution of the application by the processor 120 is stopped, and may occur in case that the processor 120 accesses to an area in which access based on the application is restricted in the memory (e.g., the volatile memory 132 of FIG. 1) based on the execution of the application. The area may include, by an operating system executed by the processor 120, one area assigned to another application different from the application, and/or the operating system. The crash may occur in a case that the processor 120 accesses to an area of the memory corresponding to an object that has not been initialized based on the execution of an application. The crash may occur in a case that a value stored in the area of the memory is changed by an unexpected operation, or in a case that the area of the memory does not have a valid address. The crash may occur in a case that the processor does not indicate the address assigned to the area of the memory, or the valid address.

Hereinafter, executing an application and/or a file may include executing instructions in a first type corresponding to the application and/or the file using the processor 120. Executing instructions by the processor 120 may include an operation in which the processor 120 performs a sequential process of fetch, decode, execution, input of data, and/or output of data, performed by the processor 120, based on the instructions. The sequential process may be referred to as a pipeline.

For example, the preset event may include a case in which instructions included in the first file 221 and/or the second file 231 are not executed. For example, the preset event may occur as the processor 120 performs a calculation corresponding to the instructions, as the processor 120, based on the instructions included in the first file 221 and/or the second file 231, accesses to an uninitialized object and/or an undefined area in the memory (e.g., the memory 130 of FIG. 1), and/or the storage 210.

The electronic device 101 according to an embodiment may perform the mount on the directories 220, 230, and 240. Performing the mount may include assigning text for invoking each of the directories 220, 230, and 240. The text may be uniquely assigned to each of the directories 220, 230, and 240. The text uniquely assigned to each of the directories 220, 230, and 240 may be referred to as a directory name. For example, the directory name may be a connected text based on a preset text (e.g., a delimiter such as "/"). For example, in a case that the area included in an uppermost directory has a name of "dir212", and the directory name assigned to the partition including the area is "data", the directory name assigned to the area may be "/data/dir212". In the example, in a case that the area is a subdirectory of the uppermost directory, and a subdirectory of another area with the name "dir919", the directory name assigned to the area may be "/data/dir919/dir212".

The processor 120 according to an embodiment may drive the instructions in the first type. For example, the instructions in the first type may include a native code. For example, the instructions in the first type may be at least a portion of a machine language and/or an assembly language, included in a binary file and encoded in a binary format stored in the storage 210. For example, the instructions in the first type may include instructions generated by compiling instructions in the second type.

For example, the instructions in the second type may be configured with a source code and/or a byte code. For example, the source code may include a C language, a JAVA language, and/or a basic (beginner's all-purpose symbolic instruction code). However, it is not limited thereto. For example, the instructions in the second type may refer to the instructions readable by an interpreter, and/or a first application 260, which are software executed by the processor 120, such as a byte code. For example, the first application 260 may be referred to as a virtual machine application (e.g., a java virtual machine (JVM)). The byte code may be the instruction having a preset length (e.g., 1 byte).

The processor 120 according to an embodiment may execute the first file 221 and/or the second file 231 through the first application 260. For example, the first file 221 and/or the second file 231 may include the instructions in the first type and/or the instructions in the second type. For example, the first application 260 may convert a method configured with the instructions in the second type into the instructions in the first type. The processor 120 may drive the first file 221 by converting at least one of the methods included in the first file 221 into the instructions in the first type through the first application 260. The method may be a group of the instructions in the first type and/or in the second type, and may be a unit of a function executed by an application corresponding to the instructions.

The processor 120 according to an embodiment may identify, through a second application 270, the preset event causing the termination of the application associated with the first file 221 while the first application 260 is executed. For example, the second application 270 may include a crash_dump. For example, the second application 270 may include a signal handler. The processor 120 may store information identifying the preset event in the third directory 240 based on identifying the preset event. The processor 120 may store the third file 241 including the information. For example, the information may include information associated with the preset event. For example, the information may include a name (e.g., a package name) indicating the application associated with the first file 221. For example, the information may include time (e.g., a timestamp) that the preset event occurred. For example, the information may include the number that the preset event occurred.

The electronic device 101 according to an embodiment may execute the application (e.g., an odsign tool) for identifying whether it is a file of the same time point as when the first file 221 and/or the second file 231 were generated. Based on the command, the electronic device 101 may identify whether the files 221 and 231 are modulated by identifying whether 'fs-verify signature' included in the first file 221 and/or the second file 231 is identical. The electronic device 101 may compile the file associated with a compilation of the files 221 and 231 through a fourth application 290 based on the modulation of the files 221 and 231. For example, the fourth application 290 may include 'odrefresh'.

The processor 120 according to an embodiment may identify the information included in the third file 241 through a third application 280. The processor 120 may compile the file associated with the first file 221 and/or the second file 231 based on the fourth application 290, based on the information identified through the third application 280. For example, the fourth application 290 may include the application for compiling packages including the instructions in the second type different from the first type. For example, the fourth application 290 may be referred to as an on-device refresh (odrefresh) tool.

For example, the fourth application 290 may be referred to as 'dex to odex tool'. For example, the processor 120 may generate the first file 221 by compiling the file (e.g., a file with a '.apk' file extension and/or a file with a '.jar' file extension) associated with the generation of the first file 221, based on the fourth application 290. For example, a file generated based on the dex2oat module may have a file extension in a form of '.vdex', '.odex', and/or '.art'. For example, the file with the file extension in the form of the '.vdex' may include an uncompressed dex code in the file with the file extension in the form of the '.apk'. For example, the file with the file extension in the form of the '.vdex' may include metadata to increase speed of checking whether it matches the first file 221. For example, the file with the file extension in the form of the '.odex' may include a code compiled in an ahead of time (AOT) method used in a method of the file with the file extension in the form of the '.apk'. For example, the file with the file extension in the form of the '.art' may include at least a portion of method and/or at least a portion of class included in the file with the file extension in the form of the '.apk'. The file having the file extension in the form of the '.art' may be executed to increase the execution speed of the application associated with the execution of the first file 221.

The processor 120 according to an embodiment may execute the application associated with the first file 221. The processor 120 may detect the preset event causing the termination of the application through the second application 270 while executing the application. In response to detecting the preset event, the processor 120 may identify the number that the preset event occurred. The processor 120 may store information including the number that the preset event occurred in the third directory 240 through the second application 270. The processor 120 may generate the third file 241 having the information including the number that the preset event occurred in the third directory 240. The processor 120 may obtain the first file 221 by compiling the file (e.g., the package file) associated with the generation of the first file 221 based on the third file 241. The file associated with the generation of the first file 221 may be configured with the instructions in the second type. For example, the processor 120 may compile at least the portion of the file associated with the generation of the first file 221 configured with the instructions in the second type. The processor 120 may obtain the first file 221 including the instructions in the first type, based on compiling at least the portion of the file associated with the generation of the first file 211.

As described above, the electronic device 101 according to an embodiment may detect the preset event causing the termination of the first file 221 and/or the second file 231. The electronic device 101 may identify the number that the preset event occurred. The electronic device 101 may compile the file associated with the generation of the first file 221, based on the number that the preset event occurred. The electronic device 101 may enhance the user experience of the electronic device 101 by obtaining the first file 221, by compiling the file associated with the generation of the first file 221 based on the number that the preset event occurred. The electronic device 101 may maintain the execution of the application when executing the application associated with the execution of the first file 221 by obtaining the first file 221, based on the number that the preset event occurred. When executing the application associated with the execution of the first file 221 by obtaining the first file 221, based on the number that the preset event occurred, the electronic device 101 may reduce the number of the termination of the application and/or frequency of the termination of the application.

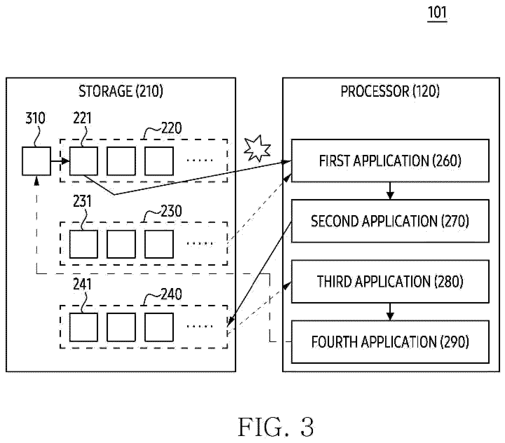

FIG. 3 is an example of a processor that executes a file stored in storage of an electronic device according to an embodiment. An electronic device 101 of FIG. 3 may be an example of the electronic device 101 of FIG. 1, and/or FIG. 2.

A first file 221 of FIG. 3 may include the first file 221 of FIG. 2. The first file 221 may include instructions in a first type for executing an application. A second file 231 of FIG. 3 may include the second file 231 of FIG. 2. The second file 231 may include instructions in the first type commonly provided to applications. A first directory 220 of FIG. 3 may include the first directory 220 of FIG. 2. The first directory 220 may include a directory associated with the applications that may be executed by a user of the electronic device 101. A second directory 230 of FIG. 3 may include the second directory 230 of FIG. 2. The second directory 230 may include files loaded by a system and commonly provided to the applications. A third file 241 of FIG. 3 may include the third file 241 of FIG. 2. The third file 241 may include information associated with a preset event that occurred in the first file 221, and/or the second file 231.

Referring to FIG. 3, the electronic device 101 according to an embodiment may execute the first file 221 stored in the first directory 220 based on a first application 260. For example, the first application may be referred to as a virtual machine application (e.g., JVM). While executing the first file 221, the electronic device 101 may identify the preset event (e.g., crash) that termination of the application associated with execution of the first file 221 is caused. For example, the first file 211 may be what the electronic device 101 compiled a file having a file extension in a form of'.apk'. For example, the first file 211 may include a file having the file extension in the form of '.odex' generated based on the compilation. For example, the preset event may occur based on damage to at least one of the instructions included in the first file 221.

The processor 120 according to an embodiment, may obtain information associated with the preset event when the preset event occurs while executing the first file 221. For example, the processor 120 may obtain the information associated with the preset event and store it in a third directory 240. For example, the third file 241 stored in the third directory 240 may be referred to as a tombstone file. The processor 120 according to an embodiment may obtain a name indicating the application associated with the execution of the first file 221 in which the preset event occurred through a second application 270. For example, the information associated with the preset event may include a process identifier (PID) associated with the preset event. For example, the information associated with the preset event may include a package name. For example, the information associated with the preset event may include a thread identifier (TID). The processor 120 may obtain the process identifier (PID) of the first file 221 in which the preset event occurred through the second application 270. The processor 120 may obtain, through the second application 270, an identifier (e.g., a thread identifier) assigned to a thread, which is a unit of work executed by the processor 120 based on the instructions in the first file 221. For example, the processor 120 may obtain information of a form such as Table 1 below.

**[Table 1]**

| |
|---|
| pid: 22222, tid: 32222, name: Thread-100 >>> com.example <<< |

A 'pid' of the Table 1 may mean the process identifier. A 'tid' of the Table 1 may mean the identifier assigned to the thread. A 'name' of the Table 1 may mean the name indicating the first file 221. The processor 120 according to an embodiment may obtain, through the second application 270, the identifier of an instruction, a register, and/or memory in which the preset event occurred in the first file 221. For example, the identifier may include the memory, and/or an address of the register associated with the preset event. The memory, and/or the address of the register associated with the preset event may be referred to as a "fault address'. For example, the processor 120 may obtain the address in which the preset event occurred through information such as Table 2 below.

**[Table 2]**

| |
|---|
| signal 11 (SIGSEGV), code 1 (SEGV MAPERR), fault addr 0xee2c0 |

The processor 120 according to an embodiment may obtain information (e.g., stack information) indicating an order of the instructions executed by the processor 120 in a unit of a method while driving the first file 221, based on identifying the preset event that occurred while executing the first file 221. For example, the stack information may include the order in which the instructions included in the first file 221 are executed while the first file 221 is being executed. For example, the stack information may be expressed such as Table 3 below.

**[Table 3]**

| |
|---|
| stack: |
| cbf6f980 45ac21a0 |
| cbf6f984 deafc563 <anonymous:d6b7d000> |
| cbf6f988 cbf76530 <anonymous:cbd7c000> |
| cbf6f990 00000003 |
| cbf6f994 cd44a06c /data/app/com.example-FAphohEqxrDy- |
| 1qfD7DjWQ==/lib/arm/libec.so (lsf2lsp+72) |

Referring to the Table 3, the stack information may include a directory of a file in which the preset event occurred. For example, the processor 120 may output the stack information based on a 'logcat' command. For example, the processor 120 may store the outputted stack information. For example, the processor 120 may store the stack information in the third directory 240. The processor 120 according to an embodiment may identify the third file 241, including the stack information, through a third application 280. For example, the processor 120 may stack backtrace the information included in the third file 241 through the third application 280. For example, the processor 120 may stack backtrace such as Table 4 below.

**[Table 4]**

| |
|---|
| backtrace: |
| #00 pc 000000000330d950 /data/misc/apexdata/com.android.art/dalvik-cache/arm64/system@framework@services.jar@classes.odex (com.android.server.wm.LockTaskController.clearLockedTask+0) |
| #01 pc 0000000003d2caac /data/misc/apexdata/com.android.art/dalvik-cache/arm64/system@framework@services.jar@classes.odex (com.android.server.wm.ActivityRecord.finishIfPossible+4956) |
| #02 pc 00000000031c843c /data/misc/apexdata/com.android.art/dalvik-cache/arm64/system@framework@services.jar@classes.odex (com.android.server.wm.ActivityClientController.finishActivity+1868) |

The processor 120 according to an embodiment may identify the number that the preset event occurred during a preset duration (e.g., 3 minutes) based on the stack information of the form such as the Table 4. The processor 120 may obtain information associated with time that the preset event occurred. The processor 120 may obtain the first file 221 based on a fourth file 310, based on that the preset event occurred the preset number (e.g., 5 times) during the preset duration. For example, the processor 120 may compile the fourth file 310, based on the information included in the third file 241, based on that the preset event occurred greater than or equal to the preset number during the preset duration. For example, the third file 241 may be stored in random access memory (RAM) different from storage 210. The processor 120 according to an embodiment may execute the third file 241, through the third application 280, based on that the preset event occurred greater than or equal to the preset number. For example, the third application 280 may include an activity manager service. The fourth file 310 may be compiled based on the instructions (e.g., a crash handling code) included in the activity manager service.

The processor 120 according to an embodiment may execute a fourth application 290 based on the third application 280. For example, the fourth application 290 may include a 'dex to odex tool'. For example, the processor 120 may compile the fourth file 310 associated with the compilation of the first file 221 based on the execution of the fourth application 290. For example, the fourth file 310 may include a file for obtaining the first file 211. For example, the fourth file 310 may have the file extension in the form of '.apk'. For example, the fourth file 310 may be configured with instructions in a second type. The processor 120 may obtain the first file 221 by compiling the fourth file 310. The first file 221 obtained by compiling the fourth file 310 may have the file extension in the form of '.odex', '.vdex', and/or '.art'. The first file 221 obtained by compiling the fourth file 310 may be the file in which instructions in which the preset event occurred are modified.

As described above, according to an embodiment, the electronic device 101 may obtain the first file 221 by compiling the fourth file 310. By obtaining the first file 221, the electronic device 101 may prevent repeated termination of the application due to repeated occurrence of the preset event.

According to an embodiment, the processor 120 may display a visual object for notifying that the first file 221 is obtained in a display of the electronic device 101, based on completing an obtainment of the first file 221 based on the fourth file 310. For example, the processor 120 may display the visual object, based on obtaining the first file 221 from the fourth file 310. As described above, according to an embodiment, the electronic device 101 may notify the user of the electronic device 101 of completion of the compilation of the fourth file 310 by displaying a visual object for notifying the obtainment of the first file 221 on a screen of the display. As described above, according to an embodiment, the electronic device 101 may enhance the user experience of the electronic device 101 by notifying the completion of the compilation of the fourth file 310.

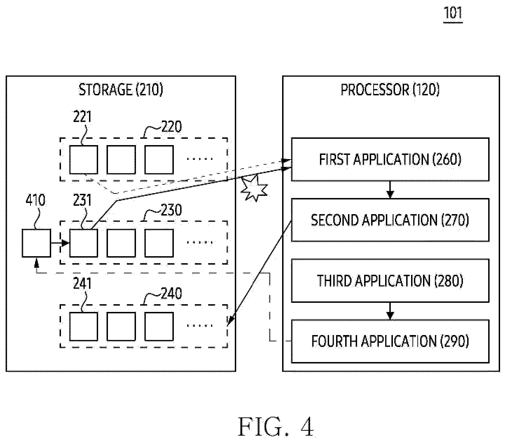

FIG. 4 is an example of a processor that executes a file stored in storage of an electronic device according to an embodiment. An electronic device 101 of FIG. 4 may be an example of the electronic device 101 of FIG. 1, FIG 2, and/or FIG 3.

A first file 221 of FIG. 4 may include the first file 221 of FIG. 1, FIG. 2, and/or FIG. 3. The first file 221 may include instructions in a first type for executing an application. A second file 231 of FIG. 4 may include the second file 231 of FIG. 1, FIG. 2, and/or FIG. 3. The second file 231 may include instructions in the first type commonly provided to applications. A third file 241 of FIG. 4 may include the third file 241 of FIG. 1, FIG. 2, and/or FIG. 3. The third file 241 may include information associated with a preset event that occurred in the first file 221 and/or the second file 231.

Referring to FIG. 4, the processor 120 according to an embodiment may execute the second file 231 based on a first application 260. For example, the second file 231 may include the instructions in the first type commonly provided to applications stored in the electronic device 101. For example, the second file 231 may be included in a second directory 230, which is at least one of system partitions. For example, the second file 231 may be referred to as a 'bootclass'. For example, the second file 231 may be referred to as 'system server jars'. For example, the processor 120 may execute the second file 231 while executing the application associated with execution of the first file 221.

According to an embodiment, the processor 120 may identify the preset event that occurred by the second file 231 while executing the application associated with the execution of the first file 221. For example, the preset event occurred by the second file 231 may include a native crash.

According to an embodiment, in a case that the preset event occurred by the second file 231, the processor 120 may obtain information associated with the time that the preset event occurred and/or the number that the preset event occurred. For example, the processor 120 may identify whether the preset event occurred greater than or equal to a preset number (e.g., 5 times) during a preset duration (e.g., 3 minutes). The processor 120 may store information for compiling the second file 231 when the preset event by the second file 231 occurs greater than or equal to the preset number during the preset duration. The processor 120 may store the information for compiling the second file 231 as the third file 241 in a third directory 240. The third file 241 may include information causing a reboot of the processor 120.

The processor 120 according to an embodiment may perform reboot of the electronic device 101 and/or the processor 120, based on that the third file 241 is stored. The processor 120 may compile a fifth file 410 in a state (e.g., post-fs-data) of performing the reboot. The fifth file 410 may be a file for obtaining the second file 231. The processor 120 may obtain the second file 231 by compiling the fifth file 410. The processor 120 may delete the third file 241 based on obtaining the second file 231 by compiling the fifth file 410.

As described above, the electronic device 101 according to an embodiment may compile the fifth file 410 for obtaining the second file 231 in a case that the preset event occurred, based on the file (e.g., the second file 231) included in the system partition. The electronic device 101 may reduce occurrence of the preset event by obtaining the second file 231 by compiling the fifth file 410. The electronic device 101 may increase the stability of the application by reducing a calculation of the processor 120 by reducing the occurrence of the preset event. For example, the electronic device 101 may reduce frequency at which the application terminated by the preset event is terminated, by reducing the occurrence of the preset event.

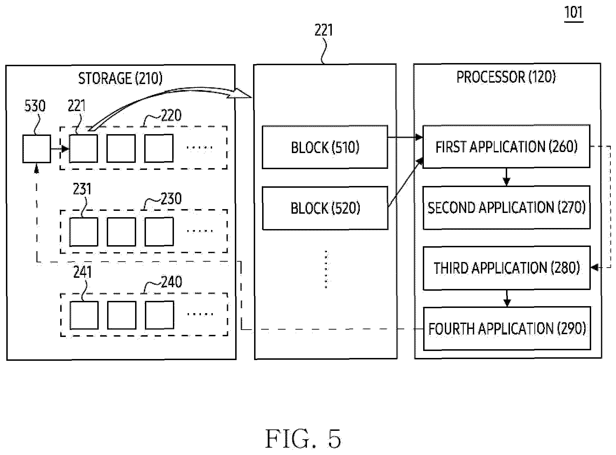

FIG. 5 is an example of a processor that executes a file stored in storage of an electronic device according to an embodiment. An electronic device 101 of FIG. 5 may be an example of the electronic device 101 of FIG. 1, FIG. 2, FIG. 3, and/or FIG. 4.

A first file 221 of FIG. 5 may include the first file 221 of FIG. 2, FIG. 3, and/or FIG. 4. The first file 221 may include instructions in a first type, and/or instructions in a second type. A second file 231 of FIG. 5 may include the second file 231 of FIG. 2, FIG. 3, and/or FIG. 4. The second file 231 may include instructions in the first type commonly provided to applications. A third file 241 of FIG. 5 may include the third file 241 of FIG. 2, FIG. 3, and/or FIG. 4. The third file 241 may include information associated with a preset event that occurred in the first file 221 and/or the second file 231. A first directory 220 of FIG. 5 may include the first directory 220 of FIG. 2, FIG. 3, and/or FIG. 4. The first directory 220 may include a directory associated with the applications that may be executed by a user of the electronic device 101. A second directory 230 of FIG. 5 may include the second directory 230 of FIG. 2, FIG. 3, and/or FIG. 4. The second directory 230 may include files loaded by a system and commonly provided to the applications.

Referring to FIG. 5, a processor 120 according to an embodiment may drive instructions in the second type included in the first file 221. The instructions in the second type may include a byte code. For example, the first file 221 may be configured with a plurality of methods. Each of the plurality of methods may be configured with different blocks. For example, the processor 120 may drive blocks 510 and 520 included in the first file 221. The processor 120 may stop driving the block 510 when the preset event occurs while driving the block 510. The processor 120 may drive the block 520 based on stopping the driving of the block 510. For example, the block 510 may include instructions in the first type generated based on a compilation of instructions in the second type grouped by a 'try' command. For example, the block 520 may include instructions in the first type generated based on the compilation of instructions in the second type grouped by a 'catch' command. The processor 120 may identify that the preset event occurred based on at least one instruction included in the block 510. For example, the processor 120 may identify the preset event that occurred in the block 510 based on the block 520. For example, the block 520 may include at least one instruction for identifying the preset event that occurs while driving the block 510. For example, the processor 120 may perform exception handling on the preset event that occurred in the block 510, based on the block 520. The block 520 was illustrated as singular, but may be plural. The processor 120 according to an embodiment may identify that the block 520 was driven greater than or equal to the preset number in preset time. The processor 120 may compile a file including the block 510 and/or the block 520, based on identifying that the block 520 was driven greater than or equal to the preset number in the preset time.

According to an embodiment, the processor 120 of the electronic device 101 may process an error that occurred while executing instructions in the first type and/or instructions in the second type included in the first file 221, based on a process (e.g., an activity manager, an exception handler, and/or a runtime handler) for exception handling. For example, instructions in the second type may be driven by an interpreter that is at least a portion of a middleware (e.g., the middleware 144 of FIG. 1) of the electronic device 101 and/or an operating system (e.g., the operating system 142 of FIG. 1). For example, instructions in the second type may be driven by a first application 260. For example, the first application 260 may include a virtual machine (e.g., a java virtual machine (JVM)). For example, the error may include a Java crash. Based on the process such as the runtime handler, the processor 120 may identify instructions for processing the error in instructions in the first type and/or instructions in the second type in the first file 221. For example, in a case of identifying the error by instructions in the first type and/or instructions in the second type in the block 510, the processor 120 may process the identified error using the block 520 corresponding to the block 510. Because of processing the identified error based on the block 520, the processor 120 may maintain execution of an application corresponding to the first file 221 independently of occurrence of the error.

The processor 120 of the electronic device 101 according to an embodiment may execute instructions in the first type and/or instructions in the second type in the block 520 based on information (e.g., crash information) on the identified error, based on identifying the error by the execution of instructions in the first type in the block 510, in a state of executing instructions in the first type and/or instructions in the second type in the block 520. The information may be stored in memory (e.g., the memory 130 of FIG. 1) and/or the storage 210, based on a data structure such as an exception object of Java. An embodiment is not limited thereto, and the processor 120 may execute a process such as a handler (e.g., uncaughtexceptionhandler) for handling the error with respect to the error that occurred by instructions of another portion of the first file 221 different from the block 510. Based on the execution of the process, the processor 120 may display a pop-up window and/or notification notifying the occurrence of the error. For example, the electronic device may display the pop-up window and/or the notification on at least a portion in a screen of the electronic device. Similar to the error due to the instructions in the block 510, based on the error that occurred by the instructions of the other portion of the first file 221 different from the block 510, the processor 120 may generate information associated with the error that occurred by the instructions of the other portion. The processor 120 according to an embodiment may track the number and/or frequency of occurrence by the execution of the first file 221 including the block 510 including the error, based on the information.

The processor 120 according to an embodiment may identify the number that the block 520 for handling of the error is invoked. The processor 120 may compile a sixth file 530 including instructions in the second type corresponding to the block 510 matched to the block 520, based on the number that the block 520 is invoked.

The processor 120 according to an embodiment may invoke the block 520 for handling of the error. For example, the processor 120 may drive the instructions included in the block 520 by invoking the block 520, based on identifying the error in the block 510 while driving the block 510. For example, the processor 120 may obtain information as illustrated in Table 5 below, based on that the preset event occurred in the block 510.

**[Table 5]**

| |
|---|
| 05-26 03:08:11.578 10268 6950 6950 E AndroidRuntime: Process: com.sec.android.app.voicenote, PID: 6950 |

Referring to the Table 5, the processor 120 may obtain information associated with time (e.g., a timestamp) that the preset event occurred, such as '05-26 03:08:11.578'. For example, the processor 120 may obtain a name (e.g., a package name) indicating an application associated with the execution of the first file 221. In the Table 5, the name indicating the application may be referred to as 'com.sec.android.app.voicenote'. For example, the processor 120 may obtain a process identifier (PID) of the first file 221. In the Table 5, the process identifier may be referred to as '6950'. The processor 120 according to an embodiment may obtain information on a reason of the preset event, based on obtaining the information such as the Table 5. The information on the reason for the preset event may include a form such as Table 6 below.

**[Table 6]**

| |
|---|
| 05-26 03:08:11.578 10268 6950 6950 E AndroidRuntime: java.lang.RuntimeException: Unable to instantiate application com.sec.android.app.voicenote.main.VoiceNoteApplication package com.sec.android.app.voicenote: java.lang.ClassNotFoundException: Didn't find class "com.sec.android.app.voicenote.main.VoiceNoteApplication" on path: DexPathList[[zip file "/data/app/VoiceNote_5.0/VoiceNote_5.0.apk"],nativeLibraryDirectories=[/data/app/VoiceNote_5.0/li b/arm64, /data/app/VoiceNote_5.0/VoiceNote_5.0.apk! /lib/arm64-v8a, /system/lib64, /system/system_ext/lib6411 |

For example, the information on the reason for the preset event may include information (e.g., "05-06 03:08:11.578" of the Table 6) associated with the time that the preset event occurred. For example, the information on the reason for the preset event may include a name (e.g., com.sec.android.app.voicenote.main.VoiceNoteApplication) indicating the application that the preset event occurred. For example, the information on the reason for the preset event may include information associated with the directory (e.g., the third directory 240) of the file (e.g., the third file 241) commonly provided to the applications. For example, the information associated with the directory of the file commonly provided to the applications may be referred to as '[[zip file"/data/app/VoiceNote_5.0/VoiceNote_5.0.apk"]', nativeLibraryDirectories=[/data/app/VoiceNote_5.0/lib/arm64, /data/app/VoiceNote_5.0/VoiceNote_5.0.apk!/lib/arm64-v8a, /system/lib64, /system/system_ext/lib64]]'. The processor 120 according to an embodiment may obtain a list of methods driven up to a time point when the preset event occurred, based on obtaining the information on the reason for the preset event. The methods may include the block 510, the block 520, and/or the instructions. The list of methods may be obtained in a form such as Table 7 below.

**[Table 7]**

| |
|---|
| 05-26 03:08:11.578 10268 6950 6950 E AndroidRuntime: at android.app.LoadedApk.makeApplication(LoadedApk.java:1465) |
| 05-26 03:08:11.578 10268 6950 6950 E AndroidRuntime: at android.app.ActivityThread.handleBindApplication(ActivityThread.java:7458) |
| 05-26 03:08:11.578 10268 6950 6950 E AndroidRuntime: at androidapp.ActivityThreadaccess$1700(ActivityThread.java:310) |
| 05-26 03:08:11.578 10268 6950 6950 E AndroidRuntime: at android.app.ActivityThread$H.handleMessage(ActivityThread.java:2281) |
| 05-26 03:08:11.578 10268 6950 6950 E AndroidRuntime: at android.os.Handler.dispatchMessage(Handler.java:106) |
| 05-26 03:08:11.578 10268 6950 6950 E AndroidRuntime: at android.os.Looper.loopOnce(Looper.java: 226) |
| 05-26 03:08:11.578 10268 6950 6950 E AndroidRuntime: |

| |
|---|
| atandroid.os.Looper.loop(Looper.java:313) |
| 05-26 03:08:11.578 10268 6950 6950 E AndroidRuntime: atandroid.app.ActivityThread.main(ActivityThread.java:8669) |
| 05-26 03:08:11.578 10268 6950 6950 E AndroidRuntime: atjava.langreflect.Method.invoke(NativeMethod) |
| 05-26 03:08:11.578 10268 6950 6950 E AndroidRuntime: at com.android.internal.os.RuntimeInit$MethodAndArgsCaller.run(Runtimelnit.java:571) |
| 05-26 03:08:11.578 10268 6950 6950 E AndroidRuntime: atcom.android.internal.os.Zygotelnit.main(Zygotelnit.java:1135) |

Referring to Table 7, the list of methods may include information (e.g., a timestamp) associated with the time that at least one of the methods is driven. The information associated with the time that at least one of the methods is driven may include a date and/or the time that at least one of the methods is driven, such as '05-26 03:08:11.578'. The list of methods may include a file including the methods. For example, the file including the methods may be displayed in the form such as 'at android.app.LoadedApk.makeApplication (LoadedApk.java:1465)'. The processor 120 according to an embodiment may track instructions in the second type included in the list of methods through the first application 260 (e.g., a virtual machine application). For example, the processor 120 may identify that an instruction for executing the application associated with the execution of the first file 221 was invoked. For example, the instruction for executing the application may be referred to as the block 520. The block 520 may include at least one instruction for handling the error.

According to an embodiment, the processor 120 may compile the sixth file 530 based on the block 520 invoked in the list of methods. For example, the processor 120 may compile the sixth file 530 including instructions in the second type corresponding to the block 510 matched to the block 520 through the fourth application 290, based on the number that the block 520 was invoked. For example, the processor 120 may obtain the first file 221 including instructions in the first type and/or instructions in the second type by compiling the sixth file 530, based on that the block 520 was invoked greater than or equal to the preset number in a preset duration.

As described above, the electronic device 101 according to an embodiment may identify the error that occurred in the block 510. The electronic device 101 may use the block 520 corresponding to the block 510, based on identifying the error that occurred in the block 510. The electronic device 101 may maintain the execution of the application independently of the error that occurred in the block 510 by using the block 520. The electronic device 101 may obtain the first file 221 by compiling the sixth file 530, based on the number and/or the frequency of occurrence of the error that occurred in the block 510. The electronic device 101 may reduce the frequency and/or the number of the error that occurred in the block 510 by obtaining the first file 221 based on the sixth file 530.

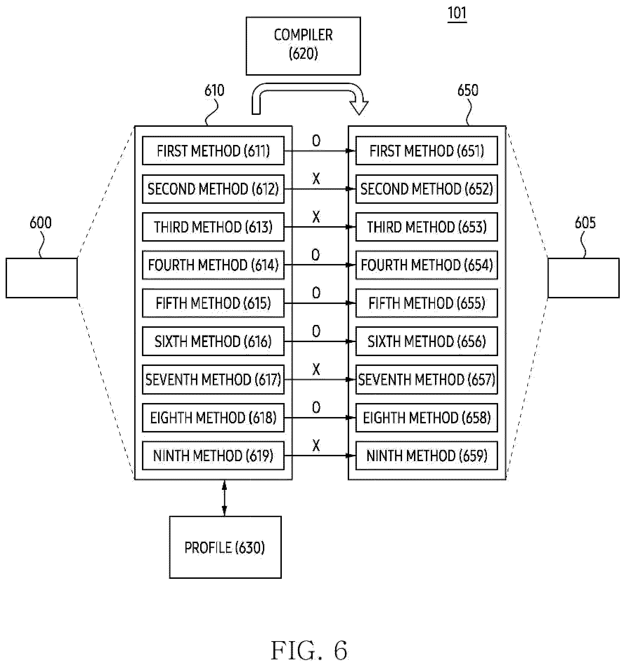

FIG. 6 is an example illustrating a file compiled by a compiler according to an embodiment. An electronic device 101 of FIG. 6 may be an example of the electronic device 101 of FIG. 1, FIG. 2, FIG. 3, FIG. 4, and/or FIG. 5.

Referring to FIG. 6, the electronic device 101 according to an embodiment may compile a file 600 based on a compiler 620. For example, the file 600 may be configured with sets of instructions in a second type. For example, the file 600 may include a plurality of methods 610. For example, a method may be a unit that distinguishes one or more instructions for executing a specific function provided by an application corresponding to a file. For example, the method may include at least one block, such as the block 510 and/or the block 520 of FIG. 5.

The electronic device 101 according to an embodiment may compile the plurality of methods 610 (e.g., a first method 611, a second method 612, a third method 613, a fourth method 614, a fifth method 615, a sixth method 616, a seventh method 617, an eighth method 618, and a ninth method 619) included in the file 600 from instructions in the second type to instructions in a first type, based on the compiler 620. For example, the electronic device 101 may obtain a plurality of methods 650 (e.g., a first method 651, a second method 652, a third method 653, a fourth method 654, a fifth method 655, a sixth method 656, a seventh method 657, an eighth method 658, and a ninth method 659) including instructions in the first type and/or instructions in the second type, by compiling the plurality of methods 610 including instructions in the second type. For example, instructions in the first type may include a native code. For example, instructions in the second type may include a source code and/or a byte code. For example, the byte code may be an instruction having a preset length (e.g., 1 byte). For example, instructions in the first type may include instructions generated by compiling instructions in the second type.

The electronic device 101 according to an embodiment may generate a profile 630 based on a user interaction. The electronic device 101 may store the generated profile 630 in storage (e.g., the storage 210 of FIG. 2 to FIG. 5) and/or memory (e.g., the memory 130 of FIG. 1). The profile 630 may include a history that executed the application corresponding to the file 600. The electronic device 101 may compile the file 600, based on the profile 630.

The electronic device 101 according to an embodiment may execute instructions in the second type, based on a virtual machine application (e.g., the first application 260 of FIG. 1 to FIG. 5). For example, instructions in the second type may be uncompiled methods. For example, the second method 652, the third method 653, the seventh method 657, and/or the ninth method 659 may be methods not compiled by the compiler 620. For example, the second method 652, the third method 653, the seventh method 657, and/or the ninth method 659 may be methods configured with instructions in the second type. For example, the electronic device 101 may drive the uncompiled methods (e.g., the second method 652, the third method 653, the seventh method 657, and/or the ninth method 659), based on the virtual machine application.

The electronic device 101 according to an embodiment may compile instructions in the second type into instructions in the first type, based on the compiler 620. For example, the electronic device 101 may compile the first method 611, the second method 612, the fourth method 614, the sixth method 615, and/or the eighth method 618, which include instructions in the second type, to convert them into methods having instructions in the first type.

The electronic device 101 according to an embodiment may identify a preset event while the application associated with the file 600 is being executed. The electronic device 101 may identify whether the preset event occurred greater than or equal to the preset number (e.g., 5 times) during a preset duration (e.g., 3 minutes). The preset event may cause termination of the application associated with execution of the file 600. The preset event may occur based on damage (e.g., crash) to at least one instruction while the application associated with the file 600 is being executed. The electronic device 101 may identify whether the preset event occurred greater than or equal to the preset number during the preset duration.

The electronic device 101 may compile the methods 610, based on identifying that the preset event occurred greater than or equal to the preset number during the preset duration. The electronic device 101 may obtain the methods 650 by compiling the methods 610. The electronic device 101 may obtain a file 605, based on obtaining the methods 610. The file 605 may include instructions in the first type, and/or instructions in the second type. The electronic device 101 may execute instructions in the first type, and/or instructions in the second type, based on the virtual machine application.

As described above, the electronic device 101 according to an embodiment may identify the preset event causing the termination of the application while executing the application associated with the file 600. The electronic device 101 may identify whether the preset event occurred greater than or equal to the preset number during the preset duration. The electronic device 101 may compile at least one method included in the file 600, based on that the preset event occurred. By compiling at least one method, the electronic device 101 may reduce the frequency of termination of the application, and/or the number of the termination of the application, when executing the application associated with the execution of the file 600.

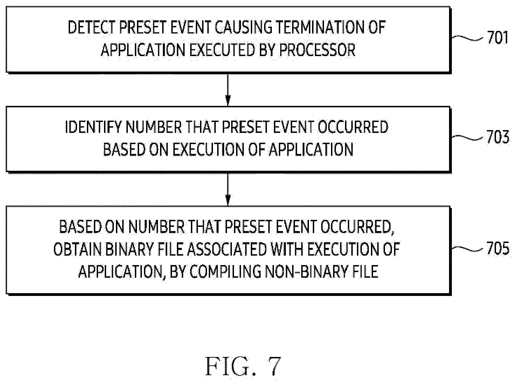

FIG. 7 is an example of a flowchart of an operation of an electronic device according to an embodiment. An electronic device of FIG. 7 may be an example of the electronic device 101 of FIG. 1, FIG. 2, FIG. 3, FIG. 4, FIG. 5, and/or FIG. 6.

Referring to FIG. 7, in operation 701, the electronic device according to an embodiment may detect a preset event causing termination of an application executed by a processor. For example, the preset event causing the termination of the application may be generated based on at least one of instructions included in files associated with the application. For example, the instructions may include instructions in a first type, and/or instructions in a second type. For example, instructions in the first type may be referred to as a native code. For example, instructions in the second type may be referred to as a byte code, and/or a source code. The electronic device may identify the number that the preset event occurred, based on detecting the preset event.

In operation 703, the electronic device according to an embodiment may identify the number that the preset event occurred, based on execution of the application. For example, the electronic device may identify the number that the preset event occurred while executing the application. For example, the electronic device may identify the number that the preset event occurred during a specified duration (e.g., 3 minutes). The electronic device may identify that the preset event occurred greater than or equal to the preset number (e.g., 5 times) during the preset duration.

In operation 705, the electronic device according to an embodiment may compile a non-binary file (e.g., the fourth file 310 of FIG. 3, the fifth file 410 of FIG. 4, and/or the sixth file 530 of FIG. 5), based on the number that the preset event occurred. The electronic device may obtain a binary file (e.g., the first file 221 of FIG. 3, the second file 231 of FIG. 4, and/or the first file 221 of FIG. 5) associated with the execution of the application, by compiling the non-binary file. The binary file may include instructions in the first type directly readable by the processor. The binary file may be referred to as a native code file from a point of view including the native code. The non-binary file may include instructions in the second type different from the instructions in the first type. The non-binary file may be referred to as a byte code file from the point of view including the byte code.

The electronic device according to an embodiment, based on instructions in the first type associated with the application, may obtain information including at least one of a name (e.g., a package name) indicating the application that the preset event occurred, time (e.g., a timestamp) that the preset event occurred, or the number that the preset event occurred. The electronic device, based on the information, may obtain the binary file associated with the execution of the application by compiling the non-binary file.

As described above, the electronic device according to an embodiment may identify the preset event causing the termination of the application. The electronic device 101 may identify whether the preset event occurred greater than or equal to the preset number during the preset duration. The electronic device may obtain the binary file by compiling the non-binary file associated with the execution of the application, based on identifying whether the preset event occurred greater than or equal to the preset number during the preset duration. By obtaining the binary file, the electronic device 101 may reduce the frequency at which the application is terminated, and/or the number that the application is terminated caused by the preset event.

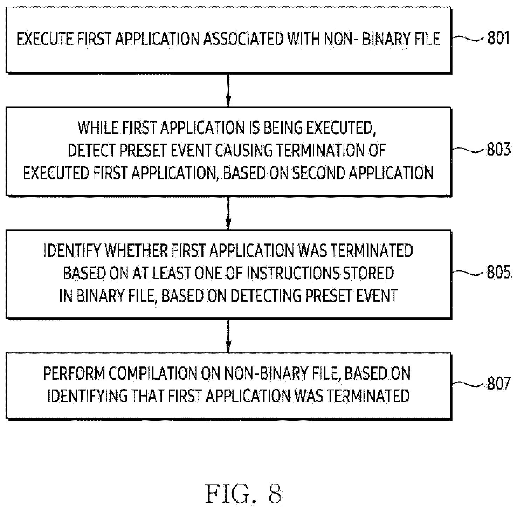

FIG. 8 is an example of a flowchart of an operation of an electronic device according to an embodiment. An electronic device of FIG. 8 may be an example of the electronic device 101 of FIG. 1, FIG. 2, FIG. 3, FIG. 4, FIG. 5 and/or FIG. 6, and/or the electronic device of FIG. 7.

Referring to FIG. 8, in operation 801, the electronic device according to an embodiment may execute a first application associated with a non-binary file. For example, the non-binary file may include instructions in a second type. For example, the instructions in the second type may include a byte code, and/or a source code.

In operation 803, the electronic device according to an embodiment may execute a second application while the first application is being executed. For example, while the first application is being executed, the electronic device may detect a preset event causing termination of the executed first application based on the second application. The electronic device may detect the preset event causing the termination of the first application through the second application. The second application may be referred to as the second application 270 of FIG. 2, FIG 3, FIG 4, and/or FIG 5. For example, the second application may include an application, and/or a function that detect a crash of the first application such as a crash_dump, and/or a signal handler.

The electronic device according to an embodiment may identify whether the preset event occurred greater than or equal to the preset number during a preset duration, based on detecting the preset event. For example, the electronic device may obtain information associated with the number that the preset event occurred, time (e.g., a timestamp) that the preset event occurred, or a name (e.g., a package name) indicating the first application that the preset event occurred.

In operation 805, the electronic device according to an embodiment may identify whether the first application was terminated based on at least one of the instructions stored in the binary file obtained by compiling the non-binary file, based on detecting the preset event. For example, the non-binary file may be referred to as the fourth file 310 of FIG. 3, the fifth file 410 of FIG. 4, and/or the sixth file 530 of FIG. 5. For example, the binary file may be referred to as the first file 221 of FIG. 3, the second file 231 of FIG. 4, and/or the first file 221 of FIG. 5. For example, at least one of the instructions stored in the binary file may include at least one of the methods. The method may include a functional unit invoked when the application is executed.

In operation 807, the electronic device according to an embodiment may perform compilation on the non-binary file, based on identifying that the first application was terminated. For example, the electronic device may identify that the application was terminated greater than or equal to the preset number (e.g., 5 times) during the preset duration (e.g., 3 minutes). For example, the electronic device may compile the non-binary file, based on identifying that the application was terminated greater than or equal to the preset number during the preset duration. The electronic device may obtain the binary file based on compiling the non-binary file.

The electronic device according to an embodiment may compile the non-binary file based on information obtained in the operation 803. For example, the electronic device may identify the non-binary file associated with the first application through the name indicating the application included in the information. The electronic device may obtain the binary file by compiling the non-binary file, based on identifying the non-binary file.

As described above, the electronic device according to an embodiment may obtain the binary file by compiling the non-binary file associated with the execution of the first application. By obtaining the binary file, the electronic device may reduce the number, and/or frequency that the first application is terminated when executing the first application associated with the execution of the non-binary file.

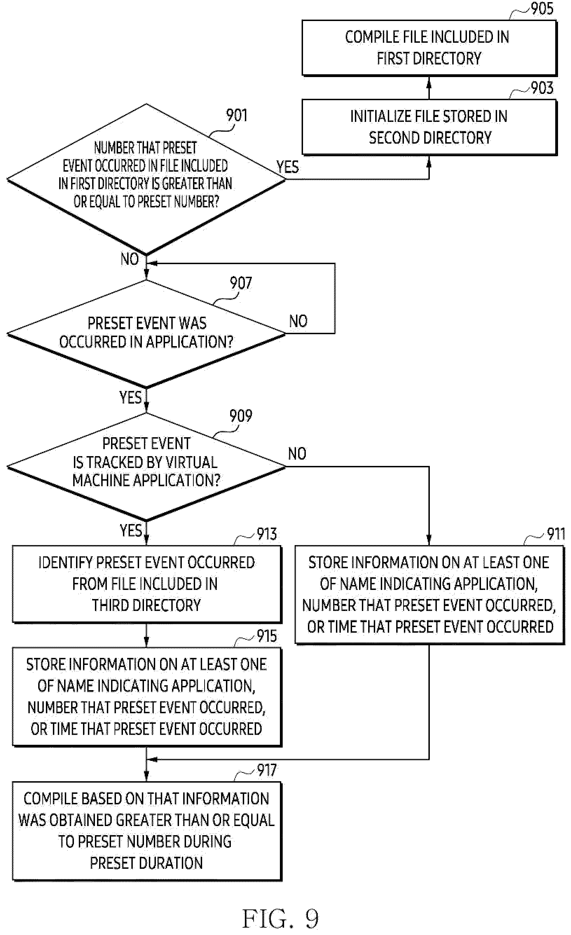

FIG. 9 is an example of a flowchart of an operation of an electronic device according to an embodiment. An electronic device of FIG. 9 may be an example of the electronic device 101 of FIG. 1, FIG. 2, FIG. 3, FIG. 4, FIG. 5 and/or FIG. 6, and/or the electronic device of FIG. 7, and/or FIG. 8.

Referring to FIG. 9, in operation 901, the electronic device according to an embodiment may identify whether the number that a preset event occurred in a file included in a first directory is greater than or equal to the preset number (e.g., 5 times). For example, the first directory may be referred to as the second directory 230 of FIG. 2. For example, when executing an application included in the electronic device, the preset event may cause the application to be terminated. For example, the event may be referred to as a crash causing termination of the application. The crash may include an error that occurred in instructions included in a native crash, a java crash, and a bootclass, and an error that occurred in instructions included in a system server class.

In a case (901-YES) that the number that the preset event occurred in the file included in the first directory is greater than or equal to the preset number, in operation 903, the electronic device according to an embodiment may initialize a file stored in a second directory. For example, the electronic device may execute reboot of the electronic device, based on identifying that the number that the preset event occurred in the file included in the first directory is greater than or equal to the preset number. For example, the electronic device may initialize the file included in the second directory, based on completing the reboot. For example, the second directory may be referred to as the third directory 240 of FIG. 2, FIG. 3, FIG. 4, and/or FIG. 5. For example, the second directory may include a file associated with compilation stored in storage (e.g., the storage 210 of FIG. 2, FIG. 3, FIG. 4, and/or FIG. 5). For example, initializing the file stored in the second directory may include deleting the file stored in the second directory.

In operation 905, the electronic device according to an embodiment may compile the file included in the first directory. For example, the electronic device may execute a tool that identifies validity of compilation output such as 'odrefresh', based on completion of the reboot. For example, the electronic device may compile the file included in the first directory by executing a 'dex to odex tool'. The file included in the first directory may have a file extension in a form of a '.apk'. For example, the file included in the first directory may have a file extension in the form of '.jar'. The electronic device may obtain a file different from the file by compiling the file included in the first directory. For example, the electronic device may obtain the file having a file extension in the form of '.vdex', '.odex', and/or '.art' by compiling the file included in the first directory.

In the case (901-NO), that the number that the preset event occurred in the file included in the first directory is less than the preset number, in operation 907, the electronic device according to an embodiment may identify whether the preset event occurred in an application. For example, in a case that the preset event (e.g., a crash) has not occurred in the bootclass, and/or the system server class, the electronic device may identify whether the preset event occurred in the application executed by a user. In the case (907-NO), that the preset event does not occur in the application, the electronic device may repeatedly identify whether the preset event occurred in the application.

In the case (907-YES) that the preset event occurred in the application, in operation 909, the electronic device according to an embodiment may identify whether the preset event is tracked by a virtual machine application. For example, the virtual machine application may include the first application 260 of FIG. 2, FIG. 3, FIG. 4, and/or FIG. 5. For example, the virtual machine application may be for driving instructions in the second type while the application is being executed. For example, the virtual machine application may drive instructions in the second type such as a byte code.

In the case (909-NO) that the preset event is not tracked by the virtual machine application, in operation 911, the electronic device according to an embodiment may obtain information including at least one of a name (e.g., a package name) indicating the application, the number that the preset event occurred, or time (e.g., a timestamp) that the preset event occurred. The electronic device may store the information in the storage of the electronic device, based on obtaining the information including at least one of the name (e.g., the package name) indicating the application, the number that the preset event occurred, or the time (e.g., the timestamp) that the preset event occurred.

In the case (909-YES) that the preset event is tracked by the virtual machine application, in operation 913, the electronic device according to an embodiment may identify that the preset event occurred from the file included in the third directory. For example, the third directory may be referred to as the first directory 220 of FIG. 2, FIG. 3, FIG. 4, and/or FIG. 5. For example, the third directory may include the file associated with the execution of the application. For example, the file included in the third directory may include the file invoked and executed by the application when the application is executed.

In operation 915, the electronic device according to an embodiment may obtain the information including at least one of the name indicating the application, the number that the preset event occurred, or the time that the preset event occurred. The electronic device may store the information in the storage, based on obtaining the information including at least one of the name indicating the application, the number that the preset event occurred, or the time that the preset event occurred.

In operation 917, the electronic device according to an embodiment may compile the file associated with the execution of the application based on the information. For example, the electronic device may compile the file in which the preset event tracked by the virtual machine application occurred, based on the information. For example, the electronic device may compile the file in which the preset event that is not tracked by the virtual machine application occurred based on the information. According to an embodiment, the electronic device may compile the file associated with the execution of the application, based on that the information was obtained greater than or equal to the preset number during the preset duration (e.g., 3 minutes) by the preset event. The electronic device according to an embodiment may display a visual object for notifying completion of the compilation in a display, based on completing compilation of the file associated with the execution of the application. The visual object may include a pop-up window, and/or notification. For example, the electronic device may display the pop-up window, and/or the notification on at least a partial area of a screen displayed in the display.

As described above, the electronic device according to an embodiment may obtain the file from which an error included in the file was removed, by compiling the file associated with the execution of the application. The electronic device may reduce the number that the application is terminated based on the preset event, and/or frequency that the application is terminated based on the preset event, while the application executed based on obtainment of the file is executed.

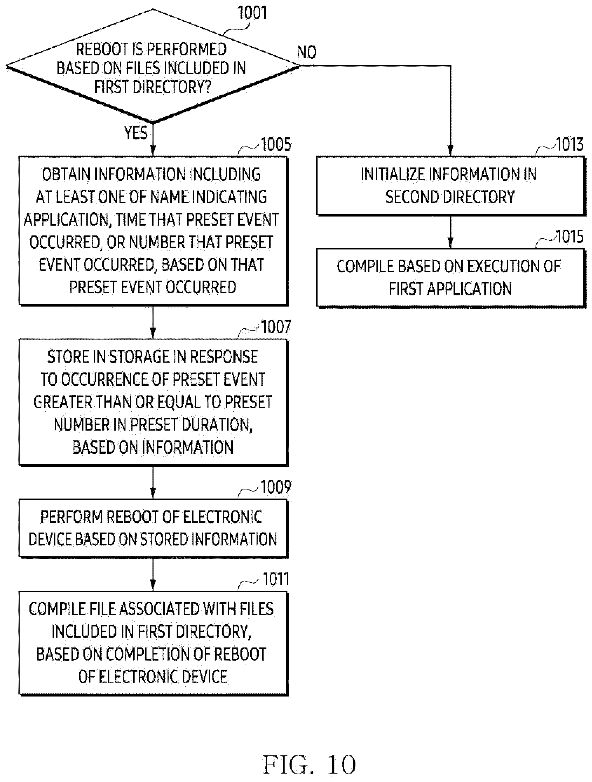

FIG. 10 is an example of a flowchart of an operation of an electronic device according to an embodiment. An electronic device of FIG. 10 may be an example of the electronic device 101 of FIG. 1, FIG. 2, FIG. 3, FIG. 4, FIG. 5, and/or FIG.6, and/or the electronic device of FIG. 7, FIG. 8, and/or FIG. 9.

Referring to FIG. 10, in operation 1001, the electronic device according to an embodiment may identify whether reboot is performed based on files included in a first directory. For example, the first directory may include files commonly provided when applications are executed. For example, the first directory may include files referred to as a bootclass or a system server class. For example, the first directory may be referred to as the second directory 230 of FIG. 2, FIG. 3, FIG. 4, and/or FIG. 5.

In operation 1005, the electronic device according to an embodiment may identify that a preset event occurred while executing an application. For example, the preset event may cause termination of the application. The preset event may cause the termination of the application, based on an error of instructions invoked while executing the application. For example, the electronic device may identify that the preset event occurred, based on at least one of the files included in the first directory. The electronic device may obtain information including at least one of a name (e.g., a package name) indicating the application, time (e.g., a timestamp) that the preset event occurred, or the number that the preset event occurred, based on that the preset event occurred.

In operation 1007, the electronic device according to an embodiment may store the information in storage, based on obtaining the information. For example, the storage may be referred to as the storage 210 of FIG. 2, FIG. 3, FIG. 4, and/or FIG. 5. For example, the storage may be referred to as the memory 130 of FIG. 1. For example, the electronic device may store the information in the storage in response to occurrence of the preset event greater than or equal to the preset number (e.g., 5 times) in a preset duration (e.g., 3 minutes), based on the information.

In operation 1009, the electronic device according to an embodiment may perform reboot of the electronic device based on the stored information. For example, the electronic device may perform the reboot of the electronic device, based on storing the information, by identifying the preset event that occurred greater than or equal to the preset number in the preset duration.

In operation 1011, the electronic device according to an embodiment may compile at least one file associated with the files included in the first directory, based on completion of the reboot. For example, the electronic device may compile at least one file associated with the files included in the first directory by executing an application such as 'odrefresh', based on that the compilation was completed. The electronic device may store a result of compiling the at least one file in the first directory, by compiling the at least one file. The result may replace the file included in the first directory. For example, by compiling the file, the electronic device may obtain a file having a file extension in a form of '.odex', '.vdex', and/or '.art'. According to an embodiment, the electronic device may delete the information based on completion of the compilation.

In the case (1001-NO) that the reboot is not performed, based on the files included in the first directory, in operation 1013, the electronic device according to an embodiment may initialize information included in a second directory. For example, the second directory may be referred to as the third directory 240 of FIG. 2, FIG. 3, FIG. 4, and/or FIG. 5. For example, the second directory may include information in which a preset error occurred. For example, initializing the information may include deleting a file including the information.

In operation 1015, the electronic device according to an embodiment may perform the compilation, based on execution of a first application. For example, the electronic device may perform the compilation, based on the files included in the second directory different from the first directory. For example, the first application may include a 'dex to odex tool'. For example, the files included in the second directory may include instructions in a second type. The electronic device may obtain the file including instructions in a first type by compiling the files included in the second directory.

As described above, the electronic device according to an embodiment may compile the file associated with the file in which the preset event occurred. The electronic device may compile the file associated with the file in which the preset event occurred, when identifying the preset event greater than or equal to the preset number in the preset duration while executing the application. The electronic device may maintain the execution of the application by compiling the file in which the preset event occurred. The electronic device may reduce the frequency of termination of the application, and/or the number of termination of the application by compiling the file in which the preset event occurred.

As described above, an electronic device (e.g., the electronic device 101 of FIG. 1, FIG. 2, FIG. 3, FIG. 4, FIG. 5, and/or FIG. 6) according to an embodiment may include a processor (e.g., the processor 120 of FIG. 1, FIG. 2, FIG. 3, FIG. 4, and/or FIG. 5), and memory (e.g., the memory 130 of FIG. 1, and/or the storage 210 of FIG. 2, FIG. 3, FIG. 4, and/or FIG. 5) for storing instructions. The processor to drive the instructions in a first type, when the instructions stored in the memory are executed, may detect a preset event to cause termination of an application executed by the processor. The processor may identify, in response to detecting the preset event, a number that the preset event occurred based on execution of the application. The processor, based on the identified number, may obtain a binary file (e.g., the first file 221 of FIG. 3, the second file 231 of FIG. 4, the first file 221 of FIG. 5, and/or the file 605 of FIG. 6) associated with execution of the application by compiling a non-binary file (e.g., the fourth file 310 of FIG. 3, the fifth file 410 of FIG. 4, the sixth file 530 of FIG. 5, and/or the file 600 of FIG. 6) that corresponds to instructions in the first type associated with the preset event and includes instructions in a second type different from the first type.

According to an embodiment, the processor may store, within the memory, information including the number that the preset event occurred to cause the termination of the application. The processor, based on identifying the identified number greater than a preset number, may perform reboot of the processor. The processor, in a state of performing the reboot, may obtain the binary file by compiling the non-binary file stored in a preset directory different from a directory (e.g., the second directory 230 of FIG. 2, FIG. 3, FIG. 4, and/or FIG. 5) where a third file (e.g., the second file 231 of FIG. 2, FIG. 3, FIG. 4, and/or FIG. 5), corresponding to the application is stored.

According to an embodiment, the processor may store, within the preset directory, instructions in the first type commonly provided to a plurality of applications including applications stored in the electronic device.

According to an embodiment, the processor, based on identifying that the preset event occurred based on instructions in the first type, may obtain information including at least one of a name indicating the application that the preset event occurred, time that the preset event occurred, or the number that the preset event occurred. The processor, based on the information, may obtain the binary file associated with the execution of the application by compiling the non-binary file.

According to an embodiment, the processor may identify that the number that the preset event occurred is greater than or equal to a preset number during preset duration.

According to an embodiment, the processor may store, within the memory, by obtaining information associated with at least one of the number that the preset event occurred, or the time that the preset event occurred, the information.

According to an embodiment, the processor may obtain the binary file by compiling the non-binary file which is a package file of the application.

According to an embodiment, the electronic device may include a display. The processor may display, in the display, a visual object to notify that the binary file is obtained by compiling the non-binary file.

According to an embodiment, the processor, based on the number of identifying the preset event during the preset duration using a first block (e.g., the block 520 of FIG. 5) to handle error in the application, may compile the non-binary file including instructions in the second type corresponding to a second block (e.g., the block 510 of FIG. 5) matched to the first block.

According to an embodiment, the processor, based on a number that a preset instruction associated with the application is invoked, and which is tracked by a virtual machine application to drive the processor based on instructions in the second type, may compile the non-binary file.

According to an embodiment, the processor may be configured to detect the preset event based on whether another area different from an area assigned to the application within the memory is accessed.

As described above, an electronic device (e.g., the electronic device 101 of FIG. 1, FIG. 2, FIG. 3, FIG. 4, FIG. 5, and/or FIG. 6) according to an embodiment may include a processor (e.g., the processor 120 of FIG. 1, FIG. 2, FIG. 3, FIG. 4, FIG. 5, and/or FIG. 6), and memory (e.g., the memory 130 of FIG. 1, and/or the storage 210 of FIG. 2, FIG. 3, FIG. 4, and/or FIG. 5) for storing instructions. The processor to drive the instructions in a first type, when the instructions stored in the memory are executed, based on a binary file (e.g., the first file 221 of FIG. 3 and/or FIG. 5) generated by compiling a non-binary file (e.g., the fourth file 310 of FIG. 3 and/or the sixth file 530 of FIG. 5) in which instructions in a second type, stored in the memory, are stored, may execute a first application associated with the non-binary file. The processor may detect a preset event to cause termination of the executed first application, based on a second application different from the first application while the first application is being executed. The processor may identify whether the first application has been terminated based on at least one of the instructions stored in the binary file, based on detecting the preset event based on the second application. The processor may perform a compilation on the non-binary file in response to identifying that the first application has been terminated based on at least one of the instructions stored in the binary file.

According to an embodiment, the processor may identify that the number that the preset event occurred is greater than or equal to a preset number during preset duration.

According to an embodiment, the processor, based on detecting the preset event, may obtain at least one of information including a name indicating the application that the preset event occurred, time that the preset event occurred, or the number that the preset event occurred. The processor, based on the information, may obtain the binary file associated with the execution of the first application by compiling the non-binary file.

According to an embodiment, the processor may obtain at least one of information on the number that the preset event occurred, or time that the preset event occurred during the preset duration, based on a first block (e.g., the block 520 of FIG. 5) to handle an error in the first application. The processor, based on the information, may compile the non-binary file including instructions in the second type corresponding to a second block (e.g., the block 510 of FIG. 5) matched to the first block.

According to an embodiment, the processor, based on a number that a preset instruction associated with the application is invoked, and which is tracked by a virtual machine application to drive the processor based on instructions in the second type, may compile the non-binary file.

As described above, according to an embodiment, a method of an electronic device (e.g., the electronic device 101 of FIG. 1, FIG. 2, FIG. 3, FIG. 4, FIG. 5, and/or FIG. 6) may include detecting, using a processor (e.g., the processor 120 of FIG. 1, FIG. 2, FIG. 3, FIG. 4, and/or FIG. 5) to drive instructions in a first type, a preset event to cause termination of an application executed by the processor. The method of the electronic device may include identifying, in response to detecting the preset event, a number that the preset event occurred based on execution of the application. The method of the electronic device, based on the identified number, may include obtaining a binary file (e.g., the first file 221 of FIG. 3, the second file 231 of FIG. 4, the first file 221 of FIG. 5, and/or the file 605 of FIG. 6) associated with execution of the application by compiling a non-binary file (e.g., the fourth file 310 of FIG. 3, the fifth file 410 of FIG. 4, the sixth file 530 of FIG. 6, and/or the file 600 of FIG. 7) that corresponds to instructions in the first type associated with the preset event and includes instructions in a second type different from the first type.

The method of the electronic device according to an embodiment may include storing, within memory (e.g., the memory 130 of FIG. 1 and/or the storage 210 of FIG. 2, FIG. 3, FIG. 4, and/or FIG. 5), information including the number that the preset event occurred to cause the termination of the application. The method of the electronic device, based on identifying the identified number greater than a preset number, may include performing reboot of the processor. The method of the electronic device, in a state of performing the reboot, may include obtaining the binary file by compiling the non-binary file stored in a preset directory different from a directory (e.g., the second directory 230 of FIG. 2, FIG. 3, FIG. 4, and/or FIG. 5) where a third file (e.g., the second file 231 of FIG. 2, FIG. 3, FIG. 4, and/or FIG. 5) corresponding to the application is stored.

The method of the electronic device according to an embodiment may include storing, within the preset directory, instructions in the first type commonly provided to a plurality of applications including the application stored in the electronic device.

According to an embodiment, the method of the electronic device, based on identifying the preset event occurred based on instructions in the first type, may include obtaining information including at least one of a name indicating the application that the preset event occurred, time that the preset event occurred, or the number that the preset event occurred. The method of the electronic device, based on the information, may include obtaining the binary file associated with the execution of the application by compiling the non-binary file.

According to an embodiment, the method of the electronic device may include identifying that the number that the preset event occurred is greater than or equal to a preset number during preset duration.

According to an embodiment, the method of the electronic device may include storing, within the memory, by obtaining information associated with at least one of the number that the preset event occurred, or the time that the preset event occurred, the information.

According to an embodiment, the method of the electronic device may include obtaining the binary file by compiling the non-binary file which is a package file of the application.

According to an embodiment, the method of the electronic device may include displaying, in a display, a visual object to notify that the binary file is obtained by compiling the non-binary file.

According to an embodiment, the method of the electronic device, based on the number of identifying the preset event during the preset duration using a first block (e.g., the block 520 of FIG. 5) to handle an error in the application, may include compiling the non-binary file including instructions in the second type corresponding to a second block (e.g., the block 510 of FIG. 5) matched to the first block.

According to an embodiment, the method of the electronic device, based on a number that a preset instruction associated with the application is invoked, and which is tracked by a virtual machine application to drive the processor based on instructions in the second type, may include compiling the non-binary file.

As described above, according to an embodiment, a method of an electronic device (e.g., the electronic device 101 of FIG. 1, FIG. 2, FIG. 3, FIG. 4, FIG. 5, and/or FIG. 6), based on a binary file (e.g., the first file 221 of FIG. 3, the second file 231 of FIG. 4, and/or the first file 221 of FIG. 5) generated by compiling a non-binary file (e.g., the fourth file 310 of FIG. 3, the fifth file 410 of FIG. 4, and/or the sixth file 530 of FIG. 5) in which instructions in a second type for obtaining instructions in a first type are stored, may include executing a first application associated with the non-binary file. The method of the electronic device may include detecting a preset event to cause termination of the executed first application, based on a second application different from the first application while the first application is being executed. The method of the electronic device may include identifying whether the first application has been terminated based on at least one of the instructions stored in the binary file, based on detecting the preset event based on the second application. The method of the electronic device may include performing a compilation on the non-binary file in response to identifying that the first application has been terminated based on at least one of the instructions stored in the binary file.

According to an embodiment, the method of the electronic device may include identifying that the number that the preset event occurred is greater than or equal to a preset number during preset duration.

According to an embodiment, the method of the electronic device, based on detecting the preset event, may include obtaining at least one of information including a name indicating the application that the preset event occurred, time that the preset event occurred, or the number that the preset event occurred. The method of the electronic device, based on the information, may include obtaining the binary file associated with the execution of the first application by compiling the non-binary file.

According to an embodiment, the method of the electronic device may include obtaining at least one of information on the number that the preset event occurred, or time that the preset event occurred during the preset duration, based on a first block (e.g., the block 520 of FIG. 5) to handle an error in the first application. The method of the electronic device may include compiling the non-binary file in which instructions in the second type corresponding to a second block (e.g., the block 510 of FIG. 5) matched to the first block are included.

According to an embodiment, the method of the electronic device, based on a number that a preset instruction associated with the application is invoked, and which is tracked by a virtual machine application to drive the processor based on instructions in the second type, may compile the non-binary file.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a processor(120); and
memory (130;210) storing instructions,
wherein the processor to drive the instructions in a first type, when the instructions stored in the memory are executed, is configured to:
detect a preset event to cause termination of an application executed by the processor;
in response to detecting the preset event, identify a number that the preset event occurred based on execution of the application; and
based on the identified number, obtain a binary file (221; 231; 605) associated with execution of the application by compiling a non-binary file (310; 410; 530; 600) that corresponds to instructions in the first type associated with the preset event and includes instructions in a second type different from the first type.

2. The electronic device (101) of claim 1, wherein the processor (120) is configured to:
store, within the memory, information including the number that the preset event occurred to cause the termination of the application;
based on identifying the identified number greater than a preset number, perform reboot of the processor; and
in a state of performing the reboot, obtain the binary file (221; 231; 605) by compiling the non-binary file (310; 410; 530; 600) stored in a preset directory different from a directory (230) where a third file (241) corresponding to the application is stored.

3. The electronic device (101) of claim 2, wherein the processor (120) is configured to:
store, within the preset directory, instructions in the first type commonly provided to a plurality of applications including applications stored in the electronic device.

4. The electronic device (101) of any one of claim 1 to claim 3, wherein the processor (120) is configured to:
based on identifying the preset event occurred based on instructions in the first type, obtain information including at least one of a name indicating the application that the preset event occurred, time that the preset event occurred, or the number that the preset event occurred; and
based on the information, obtain the binary file (221) associated with the execution of the application by compiling the non-binary file (310; 410; 530; 600).

5. The electronic device of any one of claim 1 to claim 4, wherein the processor is configured to:
identify that the number that the preset event occurred is greater than or equal to a preset number during preset duration.

6. The electronic device (101) of any one of claim 1 to claim 5, wherein the processor (120) configured to:
store, within the memory (130; 210), by obtaining information associated with at least one of the number that the preset event occurred, or the time that the preset event occurred, the information.

7. The electronic device (101) of claim 6, wherein the processor (120) is configured to:
obtain the binary file (221; 231; 605) by compiling the non-binary file (310; 410; 530; 600) which is a package file of the application.

8. The electronic device (101) of any one of claim 1 to claim 7, further comprises,
a display, and
wherein the processor (120) is configured to:
display, in the display, a visual object to notify that the binary file (221; 231; 605) is obtained by compiling the non-binary file (310; 410; 530; 600).

9. The electronic device (101) of any one of claim 1 to claim 8, wherein the processor (120) is configured to:
based on the number of identifying the preset event during the preset duration using a first block for to handle error in the application, compile the non-binary file (310; 410; 530; 600) including instructions in the second type corresponding to a second block (510) matched to the first block (520).

10. The electronic device (101) of claim 9, wherein the processor (120) is configured to:
based on a number that a preset instruction associated with the application is invoked, and which is tracked by a virtual machine application to drive the processor based on instructions in the second type, compile the non-binary file (310; 410; 530; 600).

11. The electronic device (101) of claim 1, wherein the processor (120) is configured to:
detect the preset event based on whether another area different from an area assigned to the application within the memory is accessed.

12. A method of an electronic device (101) comprising:
detecting, using a processor to drive instructions in a first type, a preset event to cause termination of an application executed by the processor;
in response to detecting the preset event, identifying a number that the preset event occurred based on execution of the application; and
based on the identified number, obtaining a binary file (221; 231; 605) associated with execution of the application by compiling a non-binary file (310; 410; 530; 600) that corresponds to instructions in the first type associated with the preset event and includes instructions in a second type different from the first type are included.

13. The method of claim 12, comprises:
storing, within memory, information including the number that the preset event occurred to cause the termination of the application;
based on identifying the identified number greater than a preset number, performing reboot of the processor; and
in a state of performing the reboot, obtaining the binary file (221; 231; 605) by compiling the non-binary file (310; 410; 530; 600) stored in a preset directory different from a directory where a third file corresponding to the application is stored.

14. The method of claim 13, further comprises:
storing, within the preset directory, instructions in the first type commonly provided to a plurality of applications including the application stored in the electronic device.

15. The method of any one of claim 11 to claim 14, comprises:
based on identifying the preset event occurred based on instructions in the first type, obtaining information including at least one of a name indicating the application that the preset event occurred, time that the preset event occurred, or the number that the preset event occurred; and
based on the information, obtaining the binary file (221; 231; 605) associated with the execution of the application by compiling the non-binary file (310; 410; 530; 600).
